# EUROPÄISCHE PATENTSCHRIFT

(11) **EP 2 903 880 B1**
(45) Veröffentlichungstag und Bekanntmachung des Hinweises auf die Patenterteilung: **14.12.2016**
(21) Anmeldenummer: 13779133.1
(22) Anmeldetag: 07.10.2013
(51) Int. Cl.: B62D 1/04, B60R 16/023, G05G 1/02, G05G 5/03

(54) **MULTIFUNKTIONALE BEDIENVORRICHTUNG ZUR BEDIENUNG EINES FAHRZEUGS**
MULTIFUNCTIONAL OPERATING DEVICE FOR OPERATING A VEHICLE
DISPOSITIF DE COMMANDE MULTIFONCTIONNEL PERMETTANT DE COMMANDER UN VÉHICULE

(30) Priorität: 08.10.2012 DE 102012019718
(43) Veröffentlichungstag der Anmeldung: 12.08.2015
(73) Patentinhaber: Kehrel AG, 01983 Großräschen (DE)
(72) Erfinder: FEDERER, Jörg, 52379 Langerwehe (DE)
(74) Vertreter: Hoefer & Partner Patentanwälte mbB
(86) Internationale Anmeldenummer: PCT/EP2013/003010
(87) Internationale Veröffentlichungsnummer: WO 2014/056600

(56) Entgegenhaltungen:
- EP-B1- 1 772 345
- US-A- 5 905 237
- US-A1- 2006 191 733

## Beschreibung

Die vorliegende Erfindung betrifft eine Multifunktions-Bedienvorrichtung zur Bedienung eines Fahrzeugs für behinderte Menschen.

Um behinderten Menschen zu ermöglichen, dass diese ein Fahrzeug, wie zum Beispiel ein Kraftfahrzeug, einen Rollstuhl oder ein Elektromobil betätigen können, sind individuell ausgeführte Bedienvorrichtungen vorzusehen. Je nach Art der Behinderung des Benutzers sind dabei unterschiedliche Bedienvorrichtungen vorzusehen, vor allem, wenn die Bedienvorrichtung multifunktional sein soll. Aus dem Stand der Technik sind diverse Multifunktions-Bedienelemente bekannt, wie beispielsweise aus der EP 1 772 345 B1, die eine Multifunktions-Bedienvorrichtung gemäß dem Oberbegriff des unabhängigen Anspruchs 1 offenbart.

Um Multifunktions-Bedienvorrichtungen zur Steuerung von Fahrzeugen einzusetzen, müssen diese eine hohe Betriebssicherheit aufweisen, um beispielsweise ungewollte Fehlbedienungen zu vermeiden. Weiterhin sollten die Multifunktions-Bedienvorrichtungen wartungsarm sein und eine hohe Lebensdauer aufweisen, da eine Wartung von den behinderten Menschen selbst oft nicht durchgeführt werden kann, sodass diese stets eine Dritten beauftragen müssen, was eine hohe Aufwand darstellt. Es ist daher Aufgabe der Erfindung, eine Multifunktions-Bedienvorrichtung zur Bedienung eines Fahrzeugs bereitzustellen, die bei einfachem und kostengünstigem Aufbau eine hohe Betriebssicherheit und eine lange Lebensdauer aufweist.

Diese Aufgabe wird durch eine Multifunktions-Bedienvorrichtung mit den Merkmalen des Anspruchs 1 gelöst. Die Unteransprüche zeigen bevorzugte Weiterbildungen der Erfindung.

Die erfindungsgemäße Multifunktions-Bedienvorrichtung weist den Vorteil auf, dass sie eine akustische Rückmeldung an den Benutzer ausgibt, sodass dieser eine Bestätigung erfährt, wenn er eine Taste oder einen Schalter der Multifunktions-Bedienvorrichtung betätigt hat. Dazu umfasst die erfindungsgemäße Multifunktions-Bedienvorrichtung ein Griffstück und einen Bedienkopf, die aneinander befestigt sind. Der Bedienkopf umfasst weiterhin ein Kopfgehäuse, ein Trägerteil und eine Platine mit zumindest einem Schaltelement. Erfindungsgemäß ist die Platine an dem Trägerteil und das Trägerteil an dem Kopfgehäuse befestigt. Dabei ist erfindungsgemäß vorgesehen, dass das Kopfgehäuse als Resonanzkörper dient und somit eine akustische Rückmeldung, die erfindungsgemäß von einem Schaltelement ausgeht, verstärkt. Somit kann der Bediener des Fahrzeugs die akustische Rückmeldung auch bei lauten Umgebungsgeräuschen, wie sie beim Betrieb eines Kraftfahrzeugs auftreten können, deutlich hören. Insbesondere sieht die vorliegende Erfindung vor, die Platine an dem Trägerteil zu lagern, sodass die Platine nicht direkt mit dem Kopfgehäuse verbunden ist, wie dies im Stand der Technik der Fall ist (hier wird die Platine an das Kopfgehäuse geklebt). Da bevorzugt das Griffstück und der Bedienkopf hohl ausgebildet sind, steht der von dem Schaltelement erzeugten akustischen Rückmeldung ein großer Resonanzkörper zur Verfügung, sodass auf diese Weise eine Verstärkung der akustischen Rückmeldung erreicht wird.

In einer bevorzugten Ausführungsform umfasst die multifunktionale Bedienvorrichtung ein Tastenfeld, wobei das Tastenfeld in mehrere Tasten unterteilt ist und an dem Trägerteil angebracht ist. Dabei ist weiterhin bevorzugt vorgesehen, dass die auf der Platine angebrachten Schaltelemente von den Tasten des Tastenfelds betätigbar sind.

Weiterhin ist bevorzugt vorgesehen, dass die akustische Rückmeldung ein mechanisch erzeugtes Geräusch ist. Besonders bevorzugt ist die akustische Rückmeldung ein Klick-Geräusch. Eine derartige Ausführung ist somit nicht abhängig von einer elektrischen Energieversorgung und führt zu einer längeren Betriebsdauer, als dies beispielsweise mit einem batteriegestützten Lautsprechersystem möglich wäre. Weiterhin wird durch die fehlende Elektronik die Zuverlässigkeit und damit die Betriebssicherheit der Multifunktions-Bedienvorrichtung erhöht. Dennoch kann dem Benutzer eine akustische Rückmeldung gegeben werden, die dieser auch bei höheren Hintergrundgeräuschen wahrnehmen kann. Dies vermindert das Risiko von ungewollten Fehlbedienungen und kann daher ebenfalls zur Betriebssicherheit der Bedienvorrichtung beitragen.

In einer weiteren bevorzugten Ausführungsform der Erfindung ist die Platine formschlüssig an dem Trägerteil angebracht. Insbesondere ist die Platine über zusätzliche Verbindungsmittel, beispielsweise über Schrauben, an dem Trägerteil angebracht. Dies ermöglicht eine Übertragung von Schwingungen, die aus der akustischen Rückmeldung des Schaltelements resultieren, ohne eine Dämpfung, die beispielsweise bei einer stoffschlüssigen Verbindung aus dem Stand der Technik auftreten würde.

Dabei ist besonders bevorzugt vorgesehen, dass das Trägerteil als Resonator für die akustische Rückmeldung des Schaltelements ausgebildet ist. Dies kann beispielsweise dadurch erreicht werden, dass ein Luftspalt zwischen der Platine und dem Trägerteil verbleibt. Dieser Luftspalt kann somit als Resonanzvolumen dienen und die akustische Rückmeldung des Schaltelements verstärken. Ein solcher Luftspalt kann durch die formschlüssige Verbindung, beispielsweise mittels Schrauben, sehr leicht erreicht werden.

Weiterhin ist bevorzugt vorgesehen, das Trägerteil formschlüssig mit dem Kopfgehäuse zu verbinden. Besonders bevorzugt werden Rastelemente verwendet, um Trägerteil und Kopfgehäuse zu verbinden. Das Trägerteil ist somit bevorzugt freischwebend in dem Kopfgehäuse aufgehangen und ist deshalb innerhalb des Resonanzkörpers schwingfähig. Bevorzugt berührt dabei die Platine das Kopfgehäuse nicht, sodass auch die Platine eine freie Schwingung nicht beeinträchtigt.

Besonders bevorzugt ist vorgesehen, dass das Trägerteil derart ausgebildet ist, dass Schwingungen an das Kopfgehäuse übertragen werden. Damit ist es möglich, die akustische Rückmeldung des Schaltelements ebenfalls als haptische Rückmeldung an den Bediener auszugeben. Da der Bediener der Multifunktions-Bedienvorrichtung üblicherweise seine Hand auf dem Griffstück platziert und seine Finger auf dem Bedienkopf ablegt, kann durch die haptische Rückmeldung zusätzlich zu der akustischen Rückmeldung dem Bediener die Betätigung des Schaltelements noch deutlicher angezeigt werden. So kann dem Bediener im Fall von sehr lauten Umgebungsgeräuschen, bei denen die akustische Rückmeldung nicht mehr wahrzunehmen ist, dennoch Feedback über die Bedienung von Tasten oder Schaltern der Multifunktions-Bedienvorrichtung gegeben werden.

Vorteilhaft ist außerdem vorgesehen, dass die Multifunktions-Bedienvorrichtung eine Signalübertragungsvorrichtung umfasst. Mittels der Signalübertragungsvorrichtung ist es möglich, ein Signal an ein zu steuerndes Fahrzeug auszugeben, wobei das Signal einen Befehl enthalten kann, der durch das Schaltelement erzeugt wurde. Insbesondere kann es sich bei der Signalübertragungsvorrichtung um einen Infrarotsender oder Funksender handeln. Dabei ist besonders bevorzugt vorgesehen, dass über das zumindest eine Schaltelement eine oder mehrere Funktionen des Fahrzeugs steuerbar sind.

Bevorzugt weist die Multifunktions-Bedienvorrichtung eine Halterung auf, über die die Bedienvorrichtung an einem zu steuernden Fahrzeug befestigbar ist. Insbesondere kann die Bedienvorrichtung an einem Lenkrad des Fahrzeugs oder an einem separaten Bedienhebel, beispielsweise zum Bremsen und Beschleunigen des Fahrzeugs, angebracht sein.

In einer weiteren vorteilhaften Ausführungsform weist die Multifunktions-Bedienvorrichtung eine Vielzahl an Schaltelementen auf, wobei jedes Schaltelement eine individuelle akustische Rückmeldung erzeugt. Beispielsweise kann so das Setzen eines Blinkers von der Aktivierung der Scheibenwischer bereits anhand der akustischen Rückmeldung unterschieden werden.

Schließlich ist es vorteilhaft, wenn die Multifunktions-Bedienvorrichtung ein Ausgleichselement aufweist. Dabei trägt das Ausgleichselement zwischen 30% und 40% des Gesamtgewichts der Multifunktions-Bedienvorrichtung und erlaubt daher ein selbständiges Ausrichten der Multifunktions-Bedienvorrichtung in dem Fall, indem diese nicht vom Bediener gegriffen wird. Beispielsweise ist bevorzugt vorgesehen, dass das Ausgleichselement an einem dem Bedienkopf abgewandten Ende des Griffstücks angebracht ist, sodass die Multifunktions-Bedienvorrichtung im nicht gegriffenen Zustand stets derart ausgerichtet ist, dass das mit dem Ausgleichselement versehene Ende des Griffstücks den tiefsten Punkt der Multifunktions-Bedienvorrichtung bildet. Dies erlaubt dem Bediener vorteilhaft, das Griffstück und den Bedienkopf ohne Verdrehen seiner Hand zu ergreifen.

Nachfolgend werden bevorzugte Ausführungsbeispiele der Erfindung unter Bezugnahme auf die begleitenden Zeichnungen beschrieben. In der Zeichnungen ist:
- Figur 1: eine schematische Darstellung der Multifunktions-Bedienvorrichtung gemäß einem bevorzugten Ausführungsbeispiel der Erfindung,
- Figur 2: eine schematische Darstellung des Bedienkopfes der Multifunktions-Bedienvorrichtung gemäß dem bevorzugten Ausführungsbeispiel der Erfindung,
- Figur 3: eine schematische Darstellung des Trägerteils der Multifunktions-Bedienvorrichtung gemäß dem bevorzugten Ausführungsbeispiel der Erfindung,
- Figur 4: eine weitere schematische Darstellung des Trägerteils der Multifunktions-Bedienvorrichtung gemäß dem bevorzugten Ausführungsbeispiel der Erfindung, aus einer anderen Perspektive,
- Figur 5: eine schematische Schnittansicht des Bedienkopfes der Multifunktions-Bedienvorrichtung gemäß dem bevorzugten Ausführungsbeispiel der Erfindung, und
- Figur 6: eine weitere schematische Schnittansicht des Bedienkopfes der Multifunktions-Bedienvorrichtung gemäß dem bevorzugten Ausführungsbeispiel der Erfindung.

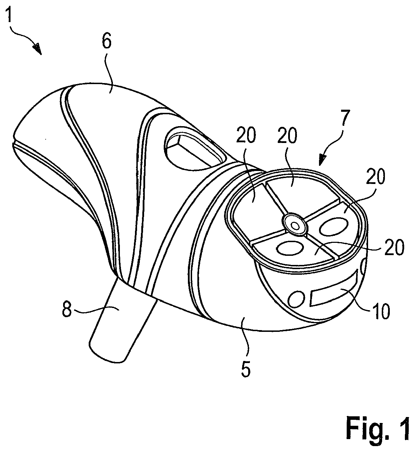

Figur 1 zeigt schematisch eine Multifunktions-Bedienvorrichtung 1 gemäß einem bevorzugten Ausführungsbeispiel der Erfindung. Die Multifunktions-Bedienvorrichtung 1 umfasst ein Griffstück 6, auf dem ein Bediener seine Hand ablegen kann, und einen Bedienkopf 7, über den der Bediener Funktionen eines zu bedienenden Fahrzeugs, zum Beispiel mit Hilfe seiner Finger, steuern kann. Dazu weist der Bedienkopf 7 mehrere Tasten 20 auf, die von dem Bediener betätigbar sind. Über die Tasten 20 ist es einem Bediener möglich, diverse Befehle auszuwählen, die über eine Signalübertragungsvorrichtung 10, beispielsweise über ein Infrarotauge oder über einen Funksender an das zu bedienende Fahrzeug übertragen werden. Um die erfindungsgemäße Multifunktions-Bedienvorrichtung mit dem Fahrzeug zu verbinden, ist eine Halterung 8 in Form einer Röhre an dem Griffstück 6 angebracht.

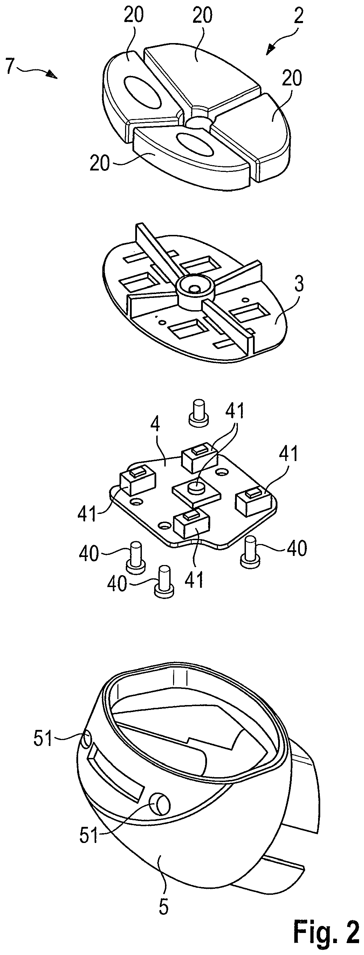

Figur 2 verdeutlicht den Aufbau des Bedienkopfs 7, indem die vom Bedienkopf 7 umfassten Bauteile in Explosionsansicht dargestellt sind. Ein Trägerteil 3 wird verwendet, um einerseits eine Platine 4, andererseits ein Tastenfeld 2 aufzunehmen. Die Platine 4 umfasst mehrere Schaltelemente 41, die durch die Tasten 20 des Tastenfelds 2 bedient werden sollen. Aus diesem Grund werden sowohl Tastenfeld 2 als auch Platine 4 derart mit dem Trägerteil 3 verbunden, dass die Tasten 20 auf die Schaltelemente 41 einwirken. Insbesondere ist die Platine 4 mit Schrauben 40 an den Trägerteil 3 befestigt. Das Trägerteil 3 wiederum wird in ein Kopfgehäuse 5 des Bedienkopfs 7 eingesetzt. Das Kopfgehäuse 5 ist, ebenso wie das Griffstück 6, hohl ausgebildet und bildet somit einen Resonanzkörper für die über das Trägerteil 3 und die Platine 4 in das Kopfgehäuse 5 eingebrachten Schaltelemente 41.

Die Schaltelemente 41 sind derart ausgebildet, dass sie bei Betätigung mechanisch ein Geräusch erzeugen. Dieses Geräusch wird daher durch den im Wesentlichen leeren Hohlkörper des Kopfgehäuses 5 und des Griffstücks 6 verstärkt, sodass es auch bei lauteren Umgebungsgeräuschen, die jederzeit im Betrieb eines Fahrzeugs auftreten können, deutlich hörbar bleibt.

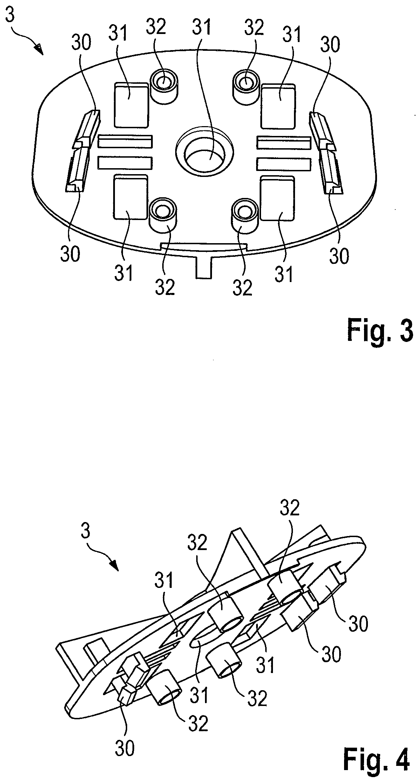

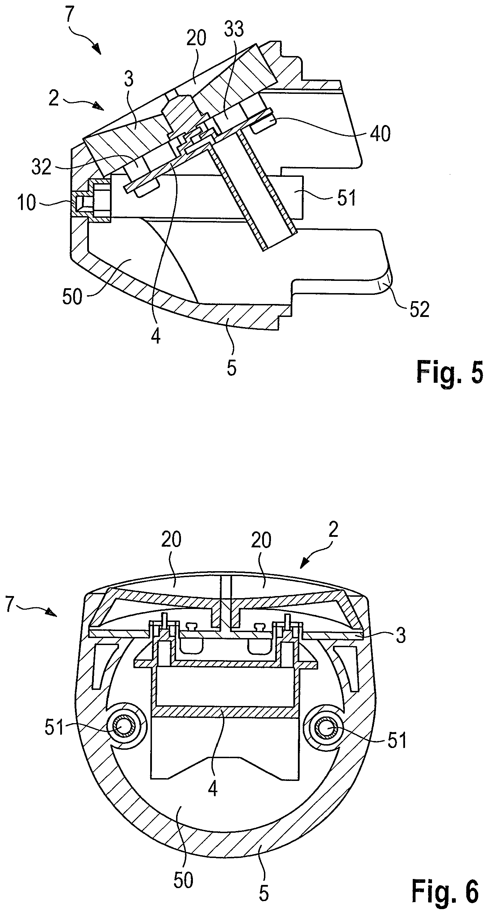

Der genaue Aufbau des als Resonanzkörper fungierenden Gehäuses der Multifunktions-Bedienvorrichtung ist in den Figuren 3 bis 6 dargestellt. Figur 3 zeigt das Trägerteil 3, das mehrere Öffnungen 31 aufweist. Über diese Öffnungen ist es möglich, dass das Tastenfeld 2, das auf einer Seite des Trägerteils befestigt ist, Zugriff auf die Schaltelemente 41 der Platine 4 hat, die auf einer anderen Seite des Trägerteils 3 befestigt ist (siehe hierzu auch Figur 2). Zur Befestigung der Platine 4 sind diverse Säulen 32 vorhanden, die zur Aufnahme von Schrauben ausgebildet sind. Somit ist es möglich, über die Höhe der Säulen 32 einen Abstand zwischen Platine 4 und Trägerteil 3 zu definieren, wodurch ein Luftspalt 33 zwischen Platine 4 und Trägerteil 3 entsteht (vgl. Figur 5). Somit dient das Trägerteil 3 als Resonator für die Schaltelemente 41 der Platine 4, indem die Schaltelemente 41 Schall in den Luftspalt zwischen Platine 4 und Trägerteil 3 einleiten.

Aus Figur 4 ist weiterhin ersichtlich, dass das Trägerteil 3 diverse Rastelemente 30 aufweist. Über die Rastelemente 30 kann das Trägerteil mit dem Kopfgehäuse 5 verbunden werden. Somit ist das Trägerteil 3 schwingfähig mit dem Kopfgehäuse 5 verbunden, wodurch Schwingungen ausgehend von den Schaltelementen 41 über das Trägerteil 3 auf das Kopfgehäuse 5 übertragen werden können. Es entsteht daher neben der akustischen auch eine haptische Rückmeldung an den Bediener. Dieser kann daher die Rückmeldung sowohl hören, als auch mit seiner auf der Multifunktions-Bedienvorrichtung 1 ruhenden Hand spüren.

Figuren 5 und 6 zeigen jeweils Schnittansichten durch den erfindungsgemäßen Bedienkopf 7. Dabei ist ersichtlich, dass der Bedienkopf 7 einen Resonanzkörper 50 umfasst, da das Innere des Kopfgehäuses 5 im Wesentlichen freies Volumen ist. Durch das Trägerteil 3 wird einerseits das Tastenfeld 2 als auch die Platine 4 gelagert. Dabei ist ersichtlich, dass die Platine 4 außer dem Trägerteil 3 keine weiteren Komponenten des Bedienkopfs 7 berührt.

Die Platine 4 ist über Schrauben 40 mit dem Trägerteil 3 verbunden. Die Schrauben 40 werden dazu in Säulen 32 eingeschraubt, sodass die Säulen 32 den Luftspalt 33 zwischen Platine 4 und Trägerteil 3 definieren. Der Luftspalt 33 dient somit als erstes Resonanzvolumen zur Verstärkung der akustischen Rückmeldung der Schaltelemente 41. Weiterhin kann durch die schwebende Anbringung des Trägerteils 3 an der Innenseite des Kopfgehäuses 5 eine dämpfungsfreie Einleitung der Schwingungen in den Resonanzkörper 50 erreicht werden. Da das Kopfgehäuse 5 einen Verbindungbereich 52 aufweist, mit dem das Kopfgehäuse mit dem ebenfalls im Wesentlichen hohlen Griffstücks 6 verbunden werden kann, erstreckt sich der Resonanzkörper 50 nicht nur auf den Bedienkopf 7, sondern auch auf das Griffstück 6 (zweites Resonanzvolumen). Die Verbindung zwischen Bedienkopf 7 und Griffstück 6 erfolgt ebenfalls über Schrauben, die jedoch in entsprechenden Schraubkanälen 51 geführt werden, um eine Dämpfung der Schwingungen innerhalb des Resonanzkörpers 50 zu vermeiden.

Durch den erfindungsgemäßen Aufbau der Multifunktions-Bedienvorrichtung ist es daher möglich, dass der Schall der akustischen Rückmeldung der Schaltelemente 41 ungedämpft in den Resonanzkörper 50 eingeleitet wird. Dies bedeutet wiederum, dass die akustische Rückmeldung der einzelnen Schaltelemente 41 deutlich verstärkt wird, sodass diese auch bei Umgebungsgeräuschen deutlich wahrnehmbar sind. Weiterhin wird durch die große Verstärkung innerhalb des Resonanzkörpers auch ein haptisches Wahrnehmen der akustischen Rückmeldung der Schaltelemente 41 durch eine auf der Multifunktions-Bedienvorrichtung 1 ruhende Hand eines Bedieners ermöglicht.

Weiterhin ersichtlich aus Figur 5 ist die Signalübertragungsvorrichtung 10, die als Infrarotauge ausgelegt ist. In einer alternativen Ausführungsform kann die Signalübertragungsvorrichtung 10 als Funksender ausgelegt sein. In diesem Fall ist eine Öffnung des Kopfgehäuses 5, wie dies für das Infrarotauge der Fall sein muss, nicht mehr erforderlich. Hierüber können die Befehle, die der Bediener durch Drücken der einzelnen Tasten 20 auswählt, an das Fahrzeug übertragen werden.

Bevorzugt ist die erfindungsgemäße Multifunktions-Bedienvorrichtung 1 an einem Lenkrad eines Fahrzeugs montiert, oder an einem separaten Bedienhebel. Auf diese Weise ist sichergestellt, dass die Multifunktions-Bedienvorrichtung 1 stets komfortabel von dem Bediener erreicht werden kann. Somit wird eine hohe Betriebssicherheit gewährleistet.

## Patentansprüche

1. Multifunktions-Bedienvorrichtung (1) zur Bedienung eines Kraftfahrzeugs für behinderte Menschen, umfassend ein Griffstück (6) und einen an diesem befestigten Bedienkopf (7), wobei der Bedienkopf (7) ein Kopfgehäuse (5) und eine Platine (4) mit zumindest einem Schaltelement (41) umfasst,
**dadurch gekennzeichnet, dass**
der Bedienkopf ein Trägerteil (3) umfasst, die Platine (4) an dem Trägerteil (3) gelagert ist, das Trägerteil (3) innerhalb des Kopfgehäuses (5) gelagert ist, das zumindest eine Schaltelement (41) ausgebildet ist, bei Betätigung eine akustische Rückmeldung auszugeben und das Kopfgehäuse (5) als Resonanzkörper (50) zur Verstärkung der akustischen Rückmeldung ausgebildet ist.

2. Multifunktions-Bedienvorrichtung (1) nach Anspruch 1, umfassend ein Tastenfeld (2) mit zumindest einer Taste (20), wobei das Tastenfeld (2) an dem Trägerteil (3) angebracht ist, so dass über die zumindest eine Taste (20) das zumindest eine Schaltelement (41) betätigbar ist.

3. Multifunktions-Bedienvorrichtung (1) nach einem der vorhergehenden Ansprüche, **dadurch gekennzeichnet, dass** die akustische Rückmeldung des zumindest einen Schaltelements (41) in Form eines mechanisch erzeugten Geräuschs, bevorzugt eines Klick-Geräuschs, ausgebildet ist.

4. Multifunktions-Bedienvorrichtung (1) nach einem der vorhergehenden Ansprüche, **dadurch gekennzeichnet, dass** die Platine (4) formschlüssig, bevorzugt über zusätzliche Verbindungsmittel (40), an dem Trägerteil (3) angebracht ist.

5. Multifunktions-Bedienvorrichtung (1) nach Anspruch 4, **dadurch gekennzeichnet, dass** das Trägerteil (3) ausgebildet ist, als Resonator für die akustische Rückmeldung des zumindest einen Schaltelements (41) zu dienen.

6. Multifunktions-Bedienvorrichtung (1) nach einem der vorhergehenden Ansprüche, **dadurch gekennzeichnet, dass** das Trägerteil (3) formschlüssig, bevorzugt mittels Rastelementen (30), mit dem Kopfgehäuse (5) verbunden ist.

7. Multifunktions-Bedienvorrichtung (1) nach Anspruch 6, wobei das Trägerteil (3) ausgebildet ist, Schwingungen an das Kopfgehäuse (5) zu übertragen, so dass die akustische Rückmeldung des zumindest einen Schaltelements (41) zusätzlich als haptische Rückmeldung an einen Bediener ausgebbar ist.

8. Multifunktions-Bedienvorrichtung (1) nach einem der vorhergehenden Ansprüche, umfassend eine Signalübertragungsvorrichtung (10), zur Übertragung eines durch das zumindest eine Schaltelement (41) erzeugten Befehls an ein Kraftfahrzeug.

9. Multifunktions-Bedienvorrichtung (1) nach einem der vorhergehenden Ansprüche, **dadurch gekennzeichnet, dass** über das zumindest eine Schaltelement (41) eine oder mehrere Funktionen eines Kraftfahrzeugs steuerbar sind.

10. Multifunktions-Bedienvorrichtung (1) nach einem der vorhergehenden Ansprüche, umfassend eine Halterung (8), über die das Multifunktions-Bedienvorrichtung (1) an einem Kraftfahrzeug befestigbar ist.

11. Multifunktions-Bedienvorrichtung (1) nach einem der vorhergehenden Ansprüche, umfassend ein im Griffstück (6) angeordnetes Ausgleichselement, wobei das Ausgleichselement einen Anteil zwischen 30% und 40% des Gesamtgewichts der Multifunktions-Bedienvorrichtung (1) ausmacht.

## Claims

1. Multifunctional operating device (1) for operating a motor vehicle for handicapped persons, comprising a handle element (6) and a control head fixed thereto (7), the control head (7) comprising a head housing (5) and a circuit board (4) with at least one switch element (41),
**characterised in that**
the control head comprises a support element (3), the circuit board (4) being mounted on the support element (3), the support element (3) being mounted inside the head housing (5), the at least one switch element (41) being constructed to emit an acoustic feedback signal on activation and the head housing (5) being designed as a resonance body (50) for amplifying the acoustic feedback signal.

2. Multifunctional operating device (1) according to claim 1, comprising a keypad (2) with at least one key (20), the keypad (2) being attached to the support element (3) such that the at least one switch element (41) can be activated by means of the at least one key (20).

3. Multifunctional operating device (1) according to any one of the preceding claims, **characterised in that** the acoustic feedback signal of the at least one switch element (41) is provided in the form of a mechanically generated sound, preferably a click sound.

4. Multifunctional operating device (1) according to any one of the preceding claims, **characterised in that** the circuit board (4) is attached to the support element (3) in a form-fitting manner, preferably by means of additional connecting means (40).

5. Multifunctional operating device (1) according to claim 4, **characterised in that** the support element (3) is constructed to serve as a resonator for the acoustic feedback signal from the at least one switch element (41).

6. Multifunctional operating device (1) according to any one of the preceding claims, **characterised in that** the support element (3) is connected to the head housing (5) in a form-fitting manner, preferably by means of latching elements (30).

7. Multifunctional operating device (1) according to claim 6, wherein the support element (3) is designed to transmit vibrations to the head housing (5) so that the acoustic feedback signal from the at least one switch element (41) can additionally be emitted to an operator as haptic feedback.

8. Multifunctional operating device (1) according to any one of the preceding claims, comprising a signal transmission device (10) for transmitting to a motor vehicle a command that is generated by the at least one switch element (41).

9. Multifunctional operating device (1) according to any one of the preceding claims, **characterised in that** one or more functions of a motor vehicle are controllable by means of the at least one switch element (41).

10. Multifunctional operating device (1) according to any one of the preceding claims, comprising a mount (8) by means of which the multifunctional operating device (1) can be fitted to a motor vehicle.

11. Multifunctional operating device (1) according to any one of the preceding claims, comprising a compensating element arranged in the handle component (6), the weight of the compensating element comprising between 30% and 40% of the total weight of the multifunctional operating device (1).

## Revendications

1. Dispositif de commande multifonctionnel (1) servant à commander un véhicule automobile pour des personnes handicapées, comprenant une pièce de préhension (6) et une tête de commande (7) fixée au niveau de cette dernière, dans lequel la tête de commande (7) comprend un boîtier de tête (5) et une platine (4) avec au moins un élément de commutation (41),
**caractérisé en ce que**
la tête de commande comprend une partie de support (3), la platine (4) est montée au niveau de la partie de support (3), la partie de support (3) est montée à l'intérieur du boîtier de tête (5), l'au moins un élément de commutation (41) est réalisé afin d'émettre, lors de l'actionnement, un signal de confirmation acoustique, et le boîtier de tête (5) est réalisé sous la forme d'un corps de résonance (50) servant à amplifier le signal de confirmation acoustique.

2. Dispositif de commande multifonctionnel (1) selon la revendication 1, comprenant un panneau à touches (2) avec au moins une touche (20), dans lequel le panneau à touches (2) est installé au niveau de la partie de support (3) de sorte que l'au moins un élément de commutation (41) puisse être actionné par l'intermédiaire de l'au moins une touche (20).

3. Dispositif de commande multifonctionnel (1) selon l'une quelconque des revendications précédentes, **caractérisé en ce que** le signal de confirmation acoustique de l'au moins un élément de commutation (41) est réalisé sous la forme d'un bruit produit mécaniquement, de préférence d'un bruit de clic.

4. Dispositif de commande multifonctionnel (1) selon l'une quelconque des revendications précédentes, **caractérisé en ce que** la platine (4) est installée par complémentarité de forme, de manière préférée par l'intermédiaire de moyens de liaison (40) supplémentaires, au niveau de la partie de support (3).

5. Dispositif de commande multifonctionnel (1) selon la revendication 4, **caractérisé en ce que** la partie de support (3) est réalisée afin de faire office de résonateur pour le signal de confirmation acoustique de l'au moins un élément de commutation (41).

6. Dispositif de commande multifonctionnel (1) selon l'une quelconque des revendications précédentes, **caractérisé en ce que** la partie de support (3) est reliée par complémentarité de forme, de manière préférée au moyen d'éléments d'enclenchement (30), au boîtier de tête (5).

7. Dispositif de commande multifonctionnel (1) selon la revendication 6, dans lequel la partie de support (3) est réalisée afin de transmettre des vibrations au niveau du boîtier de tête (5) de sorte que le signal de confirmation acoustique de l'au moins un élément de commutation (41) puisse être émis à l'attention d'un opérateur en supplément d'un signal de confirmation haptique.

8. Dispositif de commande multifonctionnel (1) selon l'une quelconque des revendications précédentes, comprenant un dispositif de transmission de signaux (10) servant à transmettre à un véhicule automobile une instruction produite par l'au moins un élément de commutation (41).

9. Dispositif de commande multifonctionnel (1) selon l'une quelconque des revendications précédentes, **caractérisé en ce qu'**une ou plusieurs fonctions d'un véhicule automobile peuvent être commandées par l'intermédiaire de l'au moins un élément de commutation (41).

10. Dispositif de commande multifonctionnel (1) selon l'une quelconque des revendications précédentes, comprenant un système de serrage (8), par l'intermédiaire duquel le dispositif de commande multifonctionnel (1) peut être fixé au niveau d'un véhicule automobile.

11. Dispositif de commande multifonctionnel (1) selon l'une quelconque des revendications précédentes, comprenant un élément de compensation disposé dans la pièce de préhension (6), dans lequel l'élément de compensation représente une proportion comprise entre 30 % et 40 % du poids total du dispositif de commande multifonctionnel (1).
